# EUROPEAN PATENT APPLICATION

(11) **EP 4 793 375 A1**
(43) Date of publication of application: **19.08.2026**
(21) Application number: 24877662.7
(22) Date of filing: 30.09.2024
(51) Int. Cl.: C22C 21/00, B22F 9/06, B22F 1/00, B33Y 70/00

(54) **MATERIAL BASED ON INTERMETALLICS OF ALUMINIUM FOR ADDITIVE TECHNOLOGIES**

(30) Priority: 11.10.2023 RU 2023125997
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, g. Krasnoyarsk, 660111 (RU); RYABOV, Dmitrij Konstantinovich, g. Krasnoyarsk, 660111 (RU); VAKHROMOV, Roman Olegovich, g. Krasnoyarsk, 660111 (RU); GRUSHIN, Ivan Alekseevich, g. Krasnoyarsk, 660111 (RU); SEFERYAN, Aleksandr Gareginovich, g. Krasnoyarsk, 660111 (RU)
(74) Representative: Atalay, Baris
(86) International application number: PCT/RU2024/050233
(87) International publication number: WO 2025/080163

(57) **Abstract**

The invention relates to metallurgy, namely to aluminium alloy powder materials used for producing parts by additive manufacturing, including selective laser melting. A powder aluminium alloy containing iron, chromium, niobium, titanium, at least one element from the group containing hafnium and yttrium, aluminium and unavoidable impurities is proposed for the manufacture of products by additive manufacturing methods operating at temperatures not exceeding 400 °C. The alloy has high specific characteristics at standard and elevated temperatures.

## Description

### Field of the invention

The invention relates to the field of metallurgy, namely to powder materials based on aluminium alloys used both in conventional methods of powder metallurgy and in producing of parts using additive manufacturing, including the method of selective laser melting (SLM).

### Prior art

Additive manufacturing is one of the most promising areas for the development of modern production, which is why it is in demand in high-tech industries and are used in the designs of aviation and rocket and space technology. Additive manufacturing has undeniable advantages over conventional one. It can significantly reduce the production time of products (especially intricate geometries), substantially increase the weight efficiency of the structure through the use of topological optimisation, reduce the commitment of subsequent machining due to the high accuracy of growing parts, and provide a high utilisation ratio of the material. One of the most common methods of additive manufacturing of products from metal materials is the selective laser melting.

In gas turbine engines (GTE), the operating temperature range of a number of products (low pressure compressor blades, flaps, ventilation system components) varies within 300-400 °C. Currently, parts of such units are made of titanium alloys or high alloy steels. However, the production process of titanium alloys is labor-intensive and resource-consuming due to the low processability of such materials, and is characterised by a low yield ratio, which leads to a high value of final products. Steel GTE components have a high density, about 7.8 g/cm³, low specific strength and are often subject to corrosion during operation. In this regard, it is relevant to develop materials and techniques associated with them that have high process, economic and thermal mechanical characteristics.

One of the ways to solve this problem is the development and application of highly heat-resistant aluminium alloys with a low specific gravity. With the development of additive manufacturing, the issue of creating aluminium materials with improved performance characteristics and high processability with selective laser melting and the absence of hot and cold cracks is becoming more acute.

Currently, the issue of improving the heat resistance of aluminium alloys is widely considered in domestic and foreign scientific literature. The most significant results were achieved in the 70s of the last century by the outstanding Soviet metallurgists V. I. Elagin, V. I. Dobatkin, in the field of powder metallurgy. Powder metal materials on their basis also perform well when compacted and pressed. There are well-known foreign works (ALCOA, Pratt and Whitney, etc.), in which aluminium-based materials have been developed showing the tensile strength at the level of 400 MPa when heated to 300□°C.

A group of alloys of the Al-Fe system is known, wherein the specified parameters are achieved by alloying with transition metals. The target heat resistance parameters are achieved in two ways (Mondolfo L. F. Aluminum Alloys: Structure and Properties. Translated from English and edited by F. I. Kvasova et al. Moscow: Metallurgy, 1979):
- the alloy of additives soluble in aluminium of transition metals that suppress the diffusion of iron in the solid solution;
- alloying with transition metals, which, as a result of the decomposition of a supersaturated solid solution, contribute to the precipitation of complex intermetallic phases.

In particular, when alloying Al-8Fe with molybdenum in an amount of up to 2 wt.%, a phase similar to Al₃Fe (in binary alloy) is formed, i.e. Mo dissolves in the solid solution and this phase, and does not form an independent compound, though providing additional high-temperature strain hardening (Mondolfo L. F. Aluminum Alloys: Structure and Properties. / Translated from English and edited by F. I. Kvasova et al. Moscow: Metallurgy, 1979. 639 p.). Based on the research carried out by Pratt and Whitney, the Al - 8 % Fe - 2 % Mo (wt.%) alloy has been developed.

A group of Al-Fe-Mo-Si powder metal materials developed by the Beijing Institute of Aerospace Materials (BIAM) is known. FMS0918 alloy is among them, which contains the following components (wt.%):

| | |
|---|---|
| iron | 9.0 |
| molybdenum | 2.0 |
| silicon | 1.6 |
| aluminium | balance. |

Due to the formation of the Al₁₂(Fe,M_{O})₃Si phase with a dispersion of particles of about 60 nm, agglomerating up to 350 nm, the alloy shows high values of mechanical characteristics at room temperature (tensile strength: 458 MPa, yield strength: 414 MPa, relative elongation: 15.7 %), at elevated temperatures up to 300 °C retains the properties at an acceptable level (tensile strength: 245 MPa, yield strength: 232 MPa, relative elongation: 10.6 %), with a further elevation of test temperature, the degradation of properties is observed. This material is produced using conventional powder techniques and is not adapted for 3D printing, since it is over-alloyed with refractory elements. (Li, P.Y., Yu, H.J., Chai, S.C., and Li, Y.R.: Microstructure and properties of rapidly solidified powder metallurgy Al-Fe-Mo-Si alloys. Scr. Mater. 49, 819 (2003), Effect of very high temperatures on the mechanical properties of Al-Fe-V-Si alloy. Scr. Metall. 23, 113 (1989)).

Another alloy of this group is FMS1224, containing the following components (wt.%):

| | |
|---|---|
| iron | 12.0 |
| molybdenum | 2.6 |
| silicon | 2.2 |
| aluminium | balance. |

Due to the formation of the Al₁₂(Fe,Mo)₃Si phase with more dispersed particles of about 30-50 nm, agglomerating up to 350 nm, the alloy shows high values of mechanical characteristics at room temperature (tensile strength: 588 MPa, yield strength: 508 MPa, relative elongation: 3.6 %), at elevated temperatures up to 300 °C retains the properties at an acceptable level (tensile strength: 297MPa, yield strength: 268 MPa, relative elongation: 4.2 %), with a further elevation of test temperature, the degradation of properties is observed (Dobatkin, Vladimir Ivanovich Granulated aluminium alloys / V. I. Dobatkin, V. I. Elagin. Moscow: Metallurgy, 1981).

There are alloys of the Al-Fe-V-Si system developed by Allied Signal. They use the principle of V Additive to stabilize the phase composition of Al-Fe-Si alloys. This principle consists in the transformation of the metastable phases Al₉Fe₃Si (tetragonal structure), Al₈Fe₂Si (hexagonal structure) and Al₃Fe (monoclinic structure) into a stable compound of Al₁₂(Fe,V)₃Si with a cubic lattice, substantively hardening aluminium matrix in a wide temperature range. The main principle of the phase formation is to observe the ratio of Fe/V ~ 5-11, as outside this range, Al₇(V,Fe), Al₃(V,Fe) phases are formed, reducing the strength characteristics. The strength characteristics at room temperature and elevated temperature decrease as the Fe/V ratio increases. 8009 alloy is among them, which contains the following components (wt.%):

| | |
|---|---|
| iron | 8.5 |
| vanadium | 1.3 |
| silicon | 1.7 |
| aluminium | balance. |

This alloy shows high values of mechanical characteristics at room temperature (tensile strength: 462 MPa, yield strength: 434 MPa, relative elongation: 12.0 %); at elevated temperatures up to 300 °C, it retains its properties at an acceptable level (tensile strength: 248 MPa, yield strength: 241 MPa, relative elongation 9 %), with a further elevation of test temperature, the degradation of properties is observed (Deformation behavior of a rapidly solidified fine grained Al-8.5%Fe-1.2%V-1.7%Si alloy. Acta Mater. 44(1), 383).

Currently, there are several alloys for use in additive manufacturing by SLM methods. Arconic Inc. filed an application for 8A55.50 alloy (publication WO2019245720) containing the following components (wt.%):

| | |
|---|---|
| iron | 0.5-16.5 |
| manganese | 0.5-16.5 |
| silicon | 4-20 |
| copper | < 1 |
| subject to total content copper and iron in the range of | 2.5-17 |
| aluminium | balance. |

Its strength, depending on the composition being opened, is in the range of 415-580 MPa, the relative elongation is 4-6 %, with an elevation of test temperature up to 300 °C, the parameters of the tensile strength are 335 MPa, the yield strength is 287 MPa and the relative elongation is 10 %. The disadvantage of the material is its low thermal stability and a strong deterioration in mechanical characteristics at operating temperatures above 350 °C.

There is a material developed by American researchers (patent US5006054), with the following chemical composition (wt.%):

| | |
|---|---|
| titanium | 15-35 |
| manganese | 3.0-15 |
| chromium | 3.0-15 |
| vanadium | up to 9 |
| aluminium | balance. |

Provided that the total content of manganese and chromium does not exceed 3.0-15. Chromium can be partially or completely replaced by iron, copper or nickel.

This alloy has high mechanical characteristics at room temperature (tensile strength: 480 MPa) and elevated temperatures (400 °C), up to 450 MPa. This alloy is suitable for powder metallurgy methods. The disadvantage is a rather high density (at the level of 3.6 g/cm³), which exceeds the parameters of conventional aluminium alloys, as well as extremely low ductility and conditional applicability in additive manufacturing.

There are well-known studies of a team of international scientists with a group of patents and applications (JPH0637696, JPH0673513, JPS6447831, KR890003976, KR930006295, US5053084), describing the invention as follows: the formula of the patented composition is presented in the form of AlaMbXd or AlaMbQcXe, where M represents at least one metallic element selected from the group consisting of Cu, Ni, Co, and Fe; Q is at least one metal element selected from the group consisting of Mn, Cr, Mo, W, V, Ti and Zr; X is at least one metallic element selected from the group consisting of Nb, Ta, Hf and Y; and a, b, c, d, and e are atomic percentages falling within the following ranges: 45 ≤ a ≤ 90, 5 ≤ b ≤ 40, 0 ≤ c ≤ 12, 0.5 ≤ d ≤ 15, and 0.5 ≤ e ≤ 0, aluminium alloy containing no less than 50 % by volume of the amorphous phase. However, due to the large amount of amorphous component in the alloy, it is quite brittle.

The known Al-Ni-Si-Fe-Cu system (patent JP4727792) contains elements by the following formula (wt.%):

| | |
|---|---|
| nickel | 10.0-20.0 |
| silicon | 8.0-25.0 |
| iron | 0.6-8.0 |
| copper | 0.6-5.0 |
| vanadium | 15.0 |
| aluminium | balance. |

The total content of iron and copper must be less than 10 wt.%. The alloy is used for selective laser sintering processes, while under normal conditions it has high strength, but at a test temperature above 300 °C, the properties of the material are distinctly reduced, while it has a sufficiently high density, low specific characteristics and ductility.

An alloy is known from the paper by the authors A. V. Kraynikov and O. D. Neykov of the Al-Fe-Cr-TM system ( Rapidly crystallized aluminium alloys for use at elevated temperatures / A. V. Kraynikov, O. D. Neykov. (Sintered metals and alloys). Text: direct // Powder metallurgy. 2012. No 9/10. P. 66-81. Bibliography: P. 78-81 (47 names).), containing (wt.%):

| | |
|---|---|
| iron | 0.7-5.3 |
| chromium | 0.7-4.4 |
| titanium | 0-6.0 |
| vanadium | 0-1 |
| zirconium | 0-1.0 |
| niobium | 0-2.0 |
| scandium | 0-0.2 |
| molybdenum | 0-1.0 |
| aluminium | balance. |

The alloy has high mechanical characteristics at room temperature up to 500 MPa, depending on the method of obtaining the powder composition, but this strength was obtained on individual flakes. The alloy also has high strength at elevated temperatures up to 400 °C. However, the alloy has a tendency to form hot cracks, has a high density and a high manufacturing cost.

An alloy based on the Al-Fe-Cr-REM system (WO2019245784) is known, which is described as follows: a material of the Al type is proposed, containing 1-15 wt.% of element A, from 1 to 20 wt.% of rare-earth elements (REM), and 0.1-5 wt.% of element X. Where A is at least one of Mn, Fe, Co, Ni, REM are rare earth elements, X is at least one of Ti, Zr, Hf, Sc, V, Mo, Nb, Ta, W and Cr. The alloy has high mechanical characteristics at room and elevated temperatures, but is low-tech for use in the additive manufacturing.

WO2017077137 discloses a method for manufacturing metal or at least partially metal components, such as parts, components and tools. Compositions of aluminium alloys are listed, which include an extensive list of components and their variations without specifying the properties of alloys of a specific composition for use in the additive manufacturing. In addition to the lack of a description of the mechanical characteristics, the alloys provide for the use of binders in the manufacturing of products. This fact does not allow manufacturing products with sufficient accuracy, due to the shrinkage of the binder component, and also leads to the need to use special software packages for its assessment. Additionally, it should be noted that most modern polymer binders are limited in the temperature range of use.

The prototype is the alloy (US2023193432), described by the following formula of components, wt.%: Fe 1.0 % to 2.5 %, Cu 1.5 % to 3.0 %, Cr 1.0 % to 2.0 %, Ti 0.5 % to 1.1 % , Zr 0.4 % to 1.0 % and Al as the base. The alloy must have a strength of 500 MPa at room temperature and 200 MPa at 350 °C.

### Disclosure of the invention

The technical problem and result of the invention is the development of a powder aluminium material with high mechanical characteristics at room temperature and increased strength and ductility at a temperature of no more than 400 °C, which makes it possible to produce heat-resistant products from it by powder metallurgy and additive manufacturing, including the selective laser melting (no hot cracks during printing), operating under performance and process heating conditions.

This technical problem is solved by the proposal of a powder aluminium alloy of a specific composition, namely, containing iron, chromium, niobium, titanium, at least one element from the group containing hafnium, yttrium, including aluminium and unavoidable impurities, along with silicon, with the following ratio of components, wt.%:

| | |
|---|---|
| iron | 2.0-5.0 |
| chromium | 2.5-5.5 |
| niobium | 0.01-1.5 |
| titanium | 0.1-0.5 |
| at least one element from the group containing hafnium, yttrium (total or separately) | 0.01-0.1 |
| aluminium and unavoidable impurities, including silicon as the balance, provided that the silicon content is: | |
| silicon | no more than 0.1. |

The content of chromium and iron must not exceed 10.3 wt.%, and to achieve maximum strength, the ratio of chromium to iron is in the range of 1-1.3.

The indication 'total or separately' means the content in the sum of two elements or the content of an individual (only one) element, in both cases, the range of values is the same.

The alloy contains ternary (Al-Fe-Cr/Al-Fe-Ti) and quaternary (Al-Fe-Cr-Nb/Al-Fe-Cr-Ti) intermetallics in an amount of 17 % to 27 %, which ensure formation of optimal structure morphology.

Another subject of the invention is a powder of the above-mentioned aluminium alloy obtained by gas atomisation using nitrogen or argon, or a mixture of these gases with oxygen. The powder contains oxygen in the amount of 0.01-0.3 wt.%.

Yet another subject of the invention is a product made of the above-mentioned aluminium alloy powder by the additive manufacturing, with a strength of no less than 140 MPa at a temperature of 400 °C.

### Embodiment of the invention

Below are the conclusions made on the basis of experimental studies.

The alloy of iron in an amount of 2.0-5.0 wt.% as one of the main elements is intended to increase the strength and heat resistance due to the formation of double intermetallics of various stoichiometric compositions, as well as the formation of eutectics, which reduces the crack susceptibility due to the formation of the structure with high-angle boundaries. It has been experimentally established that the iron content above this range will lead to a distinct embrittlement of the material due to the high content of the intermetallic phase on its basis; a lower iron content, less than 2.0 wt.%, will lead to the formation of a solid solution and an insufficient strengthening effect.

The second element to reduce the susceptibility to hot cracks is chromium. The experiments proved that the alloy of chromium in an amount of 2.5-5.5 wt.% leads to the formation of a structure based on the Al₇Cr double intermetallic, as well as an increase in the temperature range of the material use. However, the alloy of a larger amount of chromium, more than 5.5 wt.%, leads to embrittlement of the material due to the precipitation of the second intermetallic (Al₁₁Cr₂) in the zones of supersaturation with chromium, and an elevation in the melting temperature of the charge materials during production. When the content of chromium in the alloy is less than 2.5 wt.%, there is no sufficient saturation of the solid solution of aluminium with chromium and there is insufficient precipitation of intermetallics with it, which does not allow to provide high mechanical characteristics.

The simultaneous alloy of chromium and iron in a ratio close to 1-1.3 leads to the formation of ternary intermetallics and makes it possible to obtain a microstructure with a mixed type of structural components presented in the form of particles with different standard sizes and morphologies (spherical, multifaceted and dispersed). This precipitation of structural components leads to the achievement of an optimal ratio of mechanical characteristics, and allows to vary their ratio.

The alloy of niobium as a refractory component in an amount of 0.01-1.5 wt.% makes it possible to increase the physical and mechanical parameters of the material due to the precipitation of quasicrystalline particles with a size of up to 200 nm, which precipitate along the boundaries and in the body of the grains, and due to the difference in the crystallisation rates from the main phases, which are additional centers of crystallisation. This leads to dispersion of the entire structure of the material and spheroidisation of the structural components, increasing the thermal stability of the system. At these crystallisation centers, a quaternary intermetallic with a stoichiometry close to Al₁₇CrFeNb_{0.5} precipitates; it makes a significant contribution to the structure formation and mechanical characteristics at elevated temperatures. Its precipitation is possible in a narrow range of selected concentrations of the elements specified in the claims. In the absence of niobium in the composition, there is no precipitation of quaternary structural units, which leads to a decrease in the characteristics of the material at elevated temperatures. When the concentration of niobium is exceeded, depending on the content of other components, a larger amount of intermetallic is precipitated, which leads to a distinct decrease in the ductility of the material, especially at elevated temperatures, and its partial amorphisation is observed.

Titanium in an amount of 0.1-0.5 wt.% provides additional strain hardening of the material due to the formation of a fine structure with the help of the Al₃Ti double intermetallic. Also, titanium has a modifying effect on the aluminium solid solution. Excessive titanium content, more than 0.5 wt.%, will lead to the appearance of large undesirable intermetallics. If the ranges of titanium and niobium content are violated, the morphology of the secondary phases changes, and the ductile characteristics decrease. The content of titanium and niobium must differ by more than two times.

The alloy of hafnium and / or yttrium in an amount of 0.01 to 0.1 wt.%, depending on the content of the main components, leads to a modification of the structure, in particular, to the smoothing of the vertices of the structural components with a polygonal morphology, resulting in a decrease in the susceptibility to embrittlement and the formation of stress concentrators. In the absence of hafnium and / or yttrium in the composition, the structure has a coarser nature. The alloy of more than 0.1 wt.% does not lead to a greater improvement in structure formation, and the effect of alloy is less pronounced.

An impurity of silicon in the alloy above 0.1 wt.% leads to the formation of structure components with the morphology of needles with sharp vertices located along the grain boundaries, resulting in a distinct embrittlement of the material and increased cracking.

When the stipulations of the ratio of the chromium to iron content in the range of 1 to 1.3 is met, the optimal amount of intermetallics is formed. These intermetallics are located at the grain boundaries and in their body, providing such a solid solution strain hardening, at which the specified thermal mechanical characteristics are achieved.

The alloy is intended for the production of powder materials applicable for the layered growth (synthesis) of products using various techniques of additive manufacturing.

### Brief description of the drawings

The figures show:
Fig. 1. Embodiments: powder surfaces (a), powder polished sample (b, c), particle polished sample (d).
Fig. 2. Embodiment of a typical appearance of blocks after printing.
Fig. 3. Typical macro- (a, b, c) and micro- (b) cracks on blocks in case of violation of the ratio of components in the alloy.
Fig. 4. Microstructure of the synthesised material.
Fig. 5. Embodiment of growing a cylindrical billet to produce samples (a) and the billet itself (b, c) from alloy after printing.
Fig. 6. Embodiment of the effect of exceeding the silicon content on the structure (a, b) and porosity (c >0.3 wt.% Si, d <0.1 wt.% Si, e >0.1 wt.% Si).

Embodiments of the invention applications are listed below.

### Embodiment 1

The alloy was prepared in the following sequence:
Aluminium of grade A8 was melted, followed by heating of the melt to a temperature of 750-800 °C. After melting all aluminium, the melt temperature was elevated to 900-950 °C, then iron was alloyed, and the mixture was soaked until complete dissolution with periodic stirring. Then, chromium was alloyed in the form of a hardener in several stages with insignificant overheating and stirring. Soak was carried out between the alloying.

At the next stage, titanium was alloyed in the form of special aliquots, while the temperature did not fall below the equilibrium liquidus with some overheating. The alloying was carried out gradually with intensive stirring.

Next, niobium in the form of a fine fraction was introduced under the melt surface area with preheating of the melt to prevent the formation of intermediate phases. The alloying was carried out in several stages with soak. The remaining (hafnium and / or yttrium) elements were alloyed with a preliminary decrease in the temperature, soak of the melt and with stirring during the alloying.

The smelting of all compositions corresponded to the above, only with the exception of the alloying of the remaining components.

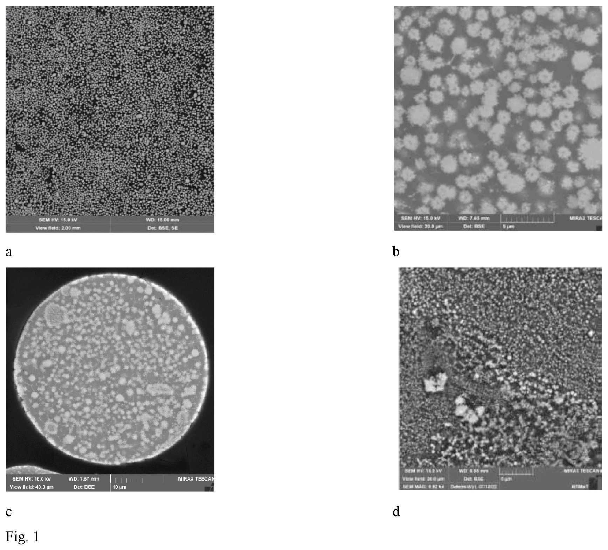

The dross was removed from the surface of the melt and samples were taken to control the chemical composition. Based on the results of the rapid testing, the chemical composition was adjusted to the calculated one. Then the melt was pulverized through a nozzle to produce spherical powders. The resulting powders were classified into a fraction of 20-63 µm (see Fig. 1). High purity argon (99.9998 %) was used as the atomisation gas. The oxygen content in the resulting powder was in the range of 0.01-0.3 wt.%. This oxygen content ensures passivation of the surface of powder materials, and also does not adversely affect their laser melting.

As a result, powders of the following chemical compositions were obtained (see Table 1):

**Table 1**

| Description | Cr/Fe | Fe+Cr, wt.% | Content of elements, wt.% | | | | | | | | | |
|---|---|---|---|---|---|---|---|---|---|---|---|---|
| | | | Al | Fe | Cr | Ti | Nb | Hf | Y | Cu | Zr | Si |
| Composition 1 | 1.25 | 4.5 | Base | 2 | 2.5 | 0.1 | 1.5 | 0.001 | - | - | - | < 0.1 |
| Composition 2 | 1 | 8 | Base | 4 | 4 | 0.5 | 0.01 | - | 0.001 | - | - | < 0.1 |
| Composition 3 | 1 | 8 | Base | 4 | 4 | 0.3 | 0.5 | 0.001 | - | - | - | < 0.1 |
| Composition 4 | 2.25 | 6.5 | Base | 2.0 | 4.5 | 0.3 | 0.5 | 0.05 | 0.05 | - | - | < 0.1 |
| Composition 5 | 1.29 | 8 | Base | 3.5 | 4.5 | 0.3 | 1.2 | 0.02 | 0.08 | - | - | < 0.1 |
| Composition 6 | 1.16 | 9.2 | Base | 4.2 | 5 | 0.3 | 1.5 | 0.1 | - | - | - | < 0.1 |
| Composition 7 | 1.26 | 9.5 | Base | 4.2 | 5.3 | 0.3 | 1.5 | - | 0.1 | - | - | < 0.1 |
| Composition 8 | 1.26 | 9.5 | Base | 4.2 | 5.3 | 0.3 | 1.5 | 0.001 | 0.001 | - | - | < 0.1 |
| Composition 9 | 1.06 | 10.3 | Base | 5 | 5.3 | 0.3 | 1.0 | 0.05 | 0.05 | - | - | < 0.1 |
| Composition 10 | 1.3 | 9.7 | Base | 4.2 | 5.5 | 0.3 | 1.3 | 0.01 | 0.01 | - | - | < 0.1 |
| Composition 11 | 3 | 8 | Base | 2 | 6 | - | 0.5 | 0.1 | - | | - | < 0.1 |
| Composition 12 | 0.96 | 12.2 | Base | 6.2 | 6 | 0.5 | 0.01 | - | 0.1 | - | - | < 0.1 |
| Prototype | 0.8 | 4.5 | Base | 2.5 | 2 | 1.1 | - | - | - | 3 | 1 | < 0.1 |

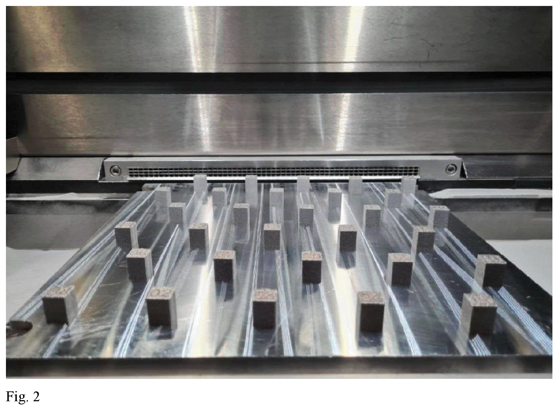

The resulting powders were used to make samples using SLM (the oxygen content does not exceed 0.01-0.3 wt.%). To make the samples, an SLM unit EOS M290 was used. The production was carried out by varying the laser power in the range of 300-350 W and the scanning speed in the range of 500-2000 mm/s. For micrographic investigations and suitability for the SLM method, 10x10x10 mm blocks were printed (see Fig. 2).

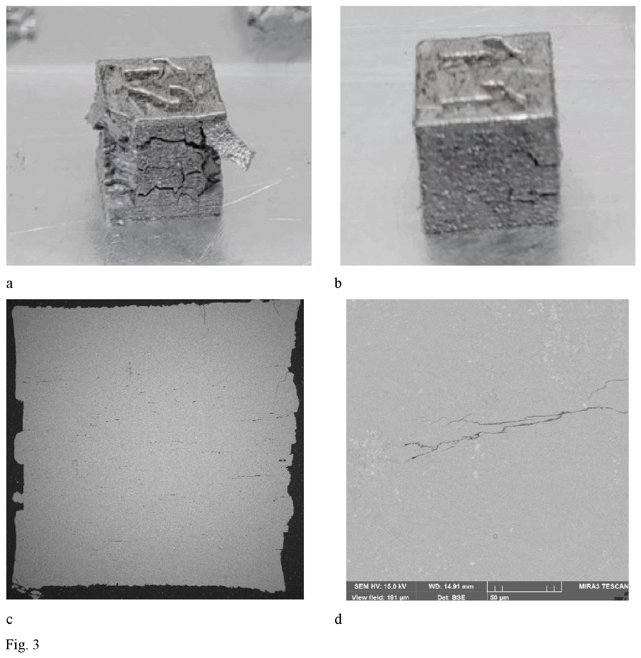

In compositions with the ratio of iron and chromium beyond the ranges of Fe+Cr ≤ 10.3 wt.% and the ratio of Cr/Fe not corresponding to 1-1.3, the formation of macrocracks was observed (see Fig. 3a, b), and cracking and / or destruction of the samples occurred, and the higher the deviation, the more pronounced the effect.

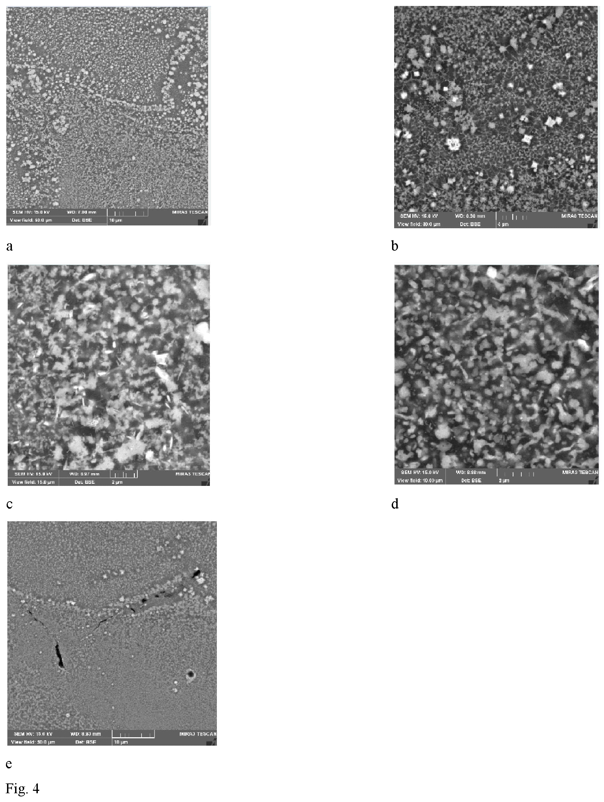

At the next stage of the work, the structure and properties of the synthesised material were studied. It was carried out using optical and electron microscopy methods. They showed that in alloys (see 1, 2, 3, 5-10, Table 1) with the ratio of the components within the specified limits (Fe+Cr ≤ 10.3 wt.% and Cr/Fe = 1-1.3), a favourable structure is formed, represented by a solid solution of aluminium, with the precipitation of structural components of various morphologies depending on the chemical composition (binary, ternary, and quaternary intermetallics) (see Fig. 4 a, b). In alloys with a violation of the selected ratios (see 4, 11 and 12, Table 1), the formation of macrocracks was observed with a strong deviation from the selected ranges (see Fig. 3 c, d), resulting in the destruction of the samples during synthesis. With smaller deviations, macro- and microcracks were formed on the surface and in the volume of the material. In alloys with the chemical composition within the specified ranges, the structure of the synthesised material is homogeneous, represented by a solid solution based on aluminium, containing structural components of various morphologies (see Fig. 4 a, b): spherical based on ternary and quaternary intermetallics Al-Fe-Cr-(Nb), a multifaceted system based on double and ternary compounds in an amount of 17 to 27 %, as well as dispersed precipitations of double stoichiometry.

At the same time, the additional alloy of hafnium and / or yttrium in the range of 0.01 to 0.1 wt.% leads to smoothing of the vertices of the multifaceted structural components, which reduces the susceptibility to form stress concentrators (Fig. 4 c, d) and subsequent formation of microcracks (Fig. 4 e).

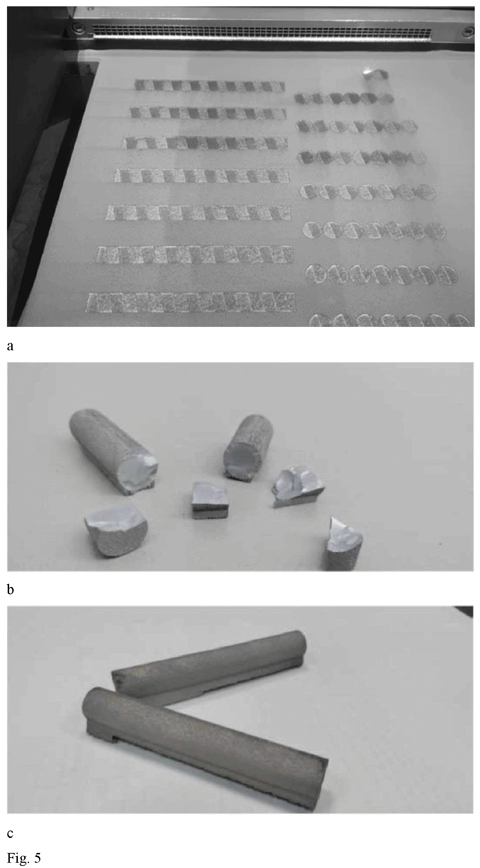

To determine the strength characteristics of alloys at room and elevated temperatures (no more than 350 °C), sample billets were synthesised (see Fig. 5).

The synthesised sample billets with the chemical composition according to Table 2 were machined as per the requirements of GOST 1497-84. Tensile tests were performed as per GOST 1497-84. The results of mechanical tests at normal and elevated temperatures are presented in Table 2.

**Table 2**

| Item No | Alloying system | Test temperature, °C | Tensile strength, MPa | Yield strength, MPa | Relative elongation according to the extensometer, % |
|---|---|---|---|---|---|
| 1 | Composition 1 | 25 | 390 | 250 | 10 |
| 2 | Composition 1 | 350 | 200 | 160 | 25 |
| 3 | Composition 2 | 25 | 430 | 295 | 9 |
| 4 | Composition 2 | 350 | 200 | 165 | 8.5 |
| 5 | Composition 3 | 25 | 440 | 325 | 12 |
| 6 | Composition 3 | 350 | 220 | 195 | 20 |
| 7 | Composition 5 | 25 | 435 | 320 | 15 |
| 8 | Composition 5 | 350 | 217 | 175 | 14 |
| 9 | Composition 6 | 25 | 415 | 325 | 12.0 |
| 10 | Composition 6 | 350 | 210 | 185 | 8 |
| 11 | Composition 7 | 25 | 455 | 270 | 10 |
| 12 | Composition 7 | 350 | 195 | 185 | 17 |
| 13 | Composition 8 | 25 | 460 | 305 | 1.5 |
| 14 | Composition 8 | 350 | 205 | 190 | 6 |
| 15 | Composition 9 | 25 | 455 | 299 | 4 |
| 16 | Composition 9 | 350 | 215 | 195 | 4 |
| 17 | Composition 10 | 25 | 460 | 320 | 5 |
| 18 | Composition 10 | 350 | 220 | 188 | 5 |
| 19 | Composition 4 | Samples collapsed | | | |
| 20 | Composition 11 | Samples collapsed | | | |
| 21 | Composition 12 | Samples collapsed | | | |
| 22 | Prototype | 25 | 500 | 400 | 8 |
| 23 | Prototype | 350 | 200 | 160 | 8 |

As can be seen from the data obtained, with the correct choice of the ratio of the alloying elements Fe+Cr ≤ 10.3 wt.% and 1:(1-1.3), the content of silicon and niobium is limited to 0.1 and 1.5 wt.%, respectively. It is possible to achieve high mechanical characteristics (tensile strength: up to 460 MPa, yield strength: up to 305, relative elongation: up to 14 %) at standard and elevated temperatures (tensile strength: up to 220 MPa, yield strength: up to 195, relative elongation: up to 20 %) , as well as to obtain sufficient processability for use in additive manufacturing.

Thus, the ratio of iron and chromium content (Fe+Cr ≤ 10.3 wt.% and 1:(1-1.3)) makes it possible to obtain high mechanical characteristics at room and elevated temperatures, the alloy of niobium makes it possible to stabilise the structure and increase the strength of the material at elevated temperatures, the alloy of yttrium and / or hafnium leads to an increase in the ductility.

Fulfilment of these conditions allows obtaining mechanical characteristics (tensile strength: 220 MPa, yield strength: 195 MPa, relative elongation: 20 %) higher than those of the prototype at elevated temperatures.

### Embodiment 2

The powders of the compositions presented in Table 3 were obtained using the technique described in Embodiment 1. The resulting powders were used to make samples with the help of SLM method. To make the samples, an SLM unit EOS M290 was used. The production was carried out by varying the laser power in the range of 300-350 W and the scanning speed in the range of 500-2000 mm/s. For micrographic investigations and suitability for the SLM method, 10x10x10 mm blocks were printed.

**Table 3**

| Description | Cr/Fe | Porosity , % | Content of elements, wt.% | | | | | | | |
|---|---|---|---|---|---|---|---|---|---|---|
| | | | Al | Fe | Cr | Ti | Nb | Hf | Y | Si |
| Composition 1 | 1.25 | 0.31 | Base | 2 | 2.5 | 0.2 | 0.05 | 0.05 | 0.05 | 0.09 |
| Composition 2 | 1.25 | 0.46 | Base | 2 | 2.5 | 0.2 | 0.05 | 0.05 | 0.05 | 0.10 |
| Composition 3 | 1.25 | 0.67 | Base | 2 | 2.5 | 0.2 | 0.05 | 0.05 | 0.05 | 0.32 |
| Composition 4 | 1 | 0.27 | Base | 4 | 4 | 0.3 | 0.5 | 0.1 | - | 0.04 |
| Composition 5 | 1 | 0.52 | Base | 4 | 4 | 0.3 | 0.5 | 0.1 | - | 0.12 |
| Composition 6 | 1.1 | 0.34 | Base | 5 | 5.5 | 0.5 | 1.5 | 0.05 | 0.05 | 0.045 |
| Composition 7 | 1.1 | 0.53 | Base | 5 | 5.5 | 0.5 | 1.5 | 0.05 | 0.05 | 0.16 |
| Composition 8 | 1 | 0.29 | Base | 4 | 4 | 0.3 | 1.5 | - | - | 0.09 |
| Composition 9 | 1 | 0.51 | Base | 4 | 4 | 0.3 | 1.5 | - | - | 0.14 |
| Composition 10 | 1.25 | 0.31 | Base | 2 | 2.5 | 0.1 | 0.01 | 0.05 | 0.05 | 0.09 |

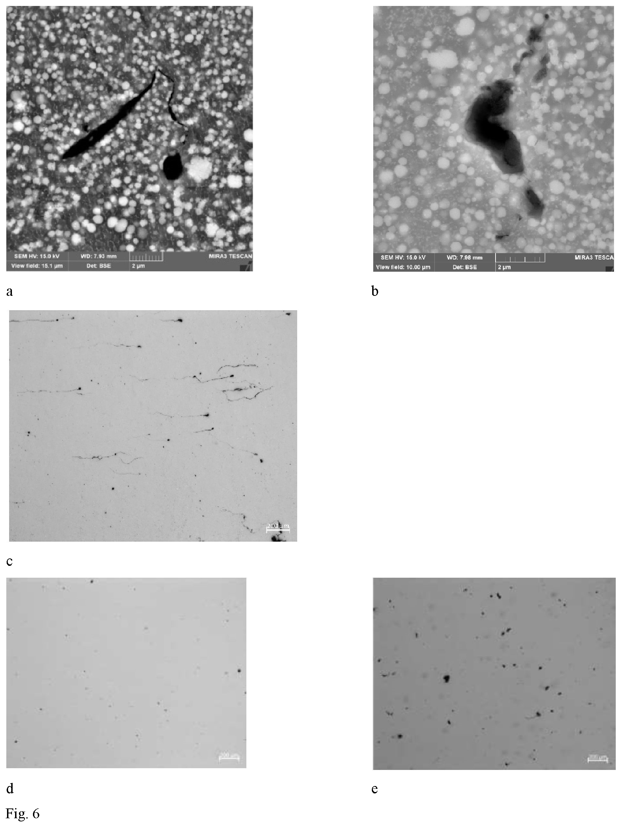

It was demonstrated that the silicon content in the alloy over 0.1 wt.% (Compositions 2, 3, 5, 7-9) results in the appearance of local defects and discontinuities (see Fig. 6 a, b), which can also lead to cracking of the synthesised material by SLM methods (see Fig. 6 c).

The porosity of the samples was determined by the method of qualitative and quantitative metallography. These polished samples were produced using standard technique; the microstructure was analysed on the unetched surface with an inverted metallographic microscope. Samples obtained using the same methods, but with different silicon content, differ in porosity. When the specified ratios are met, the porosity does not exceed 0.4% (see Fig. 4 d), and if deviates from them, it increases significantly (see Fig. 4 e).

When the silicon content in the chemical composition was exceeded, the material was embrittled due to low ductility, which led to the destruction of the billets when removing them from the framework (see Fig. 5 b).

### Embodiment 3

Alloys 3, 5 and 6 used in Embodiment 1 were prepared with commercial aluminum of grade A8 and charge materials ArmkoFe, Al-20Cr, Al-5Ti, niobium of grade Nb. After the aluminium melting, the melt temperature was elevated to 900-950 °C, the entire aliquot of iron was alloyed, regularly stirring the melt until the iron was completely dissolved, the melt temperature was maintained in the range of 870-930 °C. Next, the Al-20Cr master alloy was alloyed. The alloying can be carried out in several steps with stirring and overheating by 50 °C relative to the equilibrium diagram. Before the alloying of the Al-5Ti master alloy, the melt was soaked for 15 minutes, and then the master alloy was alloyed. Niobium was alloyed in the last turn to the desired concentration in the finely dispersed state in several steps with intensive stirring and maintaining the melt temperature above 1300 °C.

Then, spraying of the resulting alloys was carried out in an atomizer using argon. As a result of spraying and screening, a powder with a fraction of 20-63 µm was obtained. Then, various test samples were printed using the EOS M290 unit. The samples were examined for features of structure formation and were tested by tension at an elevated temperature after preliminary annealing at 400 °C for no less than 4 hours (see Fig. 5). See the test results in Table 4.

Alloys are characterised by high strength and ductility at standard temperatures at the level of high-strength aluminium alloys, and mechanical characteristics at elevated (no more than 400 °C) temperatures, give them heat resistance, which makes it possible to use printed products in various fields, including aerospace engineering, automotive industry and mechanical engineering.

**Table 4**

| Item No | Alloying system | Test temperature, °C | Tensile strength, MPa | Yield strength, MPa | Relative elongation according to the extensometer, % |
|---|---|---|---|---|---|
| 1 | Composition 3 | 400 | 160 | 155 | 11 |
| 2 | Composition 5 | 400 | 150 | 145 | 14 |
| 3 | Composition 6 | 400 | 165 | 155 | 12 |

The obtained mechanical characteristics demonstrate the possibility of using the developed material in products obtained by additive manufacturing methods and operating at temperatures not exceeding 400 °C.

### Embodiment 4

The melt for spraying powders on a vertical atomiser was produced as in Embodiment 1. Then, dross was removed from the surface of the melt and sampled to control the chemical composition (see Table 5). Based on the results of the rapid testing, the chemical composition was adjusted to the calculated one. Then the melt was pulverized through a nozzle to produce spherical powders. The resulting powders were classified into a fraction of 20-63 µm (see Fig. 1). A nitrogen-oxygen mixture (3 vol.% oxygen content) was used as the atomisation gas. The oxygen content in the resulting powders was in the range of 0.01-0.3 wt.% (see Table 5). This oxygen content ensures passivation of the surface of powder materials, and also does not adversely affect their laser melting.

**Table 5**

| Description | Cr/Fe | Fe+Cr, wt.% | Content of elements, wt.% | | | | | | | | | | |
|---|---|---|---|---|---|---|---|---|---|---|---|---|---|
| | | | Al | Fe | Cr | Ti | Nb | Hf | Y | Cu | Zr | Si | O |
| Composition 1 | 1.25 | 4.5 | Base | 2 | 2.5 | 0.1 | 1.5 | 0.001 | - | - | - | < 0.1 | 0.01 |
| Composition 2 | 1 | 8 | Base | 4 | 4 | 0.5 | 0.01 | - | 0.001 | - | - | < 0.1 | 0.28 |
| Composition 3 | 1.3 | 9.7 | Base | 4.2 | 5.5 | 0.3 | 1.3 | 0.01 | 0.01 | - | - | < 0.1 | 0.30 |
| Composition 4 | 3 | 8 | Base | 2 | 6 | - | 0.5 | 0.1 | - | | - | < 0.1 | 0.22 |
| Composition 5 | 0.96 | 12.2 | Base | 6.2 | 6 | 0.5 | 0.01 | - | 0.1 | - | - | < 0.1 | 0.29 |

As a result of the experimental and development studies, it was confirmed that the selected alloy composition, concentration and ratio of components ensure the solution of the problem and the achievement of the technical result.

Taking into account the above description and embodiments, the scope of protection is claimed for a powder aluminium alloy for the production of heat-resistant products by powder metallurgy and additive manufacturing, containing aluminium, iron, chromium, niobium, titanium, as well as additionally containing hafnium and / or yttrium, with the following ratio of components, wt.%:

| | |
|---|---|
| iron | 2.0-5.0 |
| chromium | 2.5-5.5 |
| niobium | 0.01-1.5 |
| titanium | 0.1-0.5 |
| hafnium and / or yttrium (total or separately) | 0.01-0.1 |
| aluminium | and unavoidable impurities, including silicon as the balance, while the silicon content is no more than 0.1. |

It is also advisable that the content of chromium and iron does not exceed 10.3 wt.%, and the ratio of chromium to iron is in the range of 1-1.3. The proposed alloy preferably contains ternary (Al Fe-Cr / Al-Fe-Ti) and quaternary (Al-Fe-Cr-Nb / Al-Fe-Cr-Ti) intermetallics in an amount of 17 % to 27 %, which ensure formation of optimal structure morphology.

Another subject is a powder of the specified aluminium alloy obtained by gas atomisation using nitrogen or argon, or a mixture of these gases with oxygen, while the powder contains oxygen in an amount of 0.01-0.3 wt.%.

Yet another subject is a product made of such a powder, produced by the method of additive manufacturing, having a strength of no less than 140 MPa at a temperature of 400 °C.

## Claims

1. Powder aluminium alloy for production of heat-resistant products by methods of powder metallurgy and additive manufacturing, containing aluminium, iron, chromium, niobium, titanium, **characterized in that** it additionally contains hafnium and / or yttrium, with the following ratio of components, wt.%:
| | |
|---|---|
| iron | 2.0-5.0 |
| chromium | 2.5-5.5 |
| niobium | 0.01-1.5 |
| titanium | 0.1-0.5 |
| hafnium and / or yttrium (total or separately) | 0.01-0.1 |
| aluminium | and unavoidable impurities, including silicon as the balance, while the silicon content is no more than 0.1. |

2. The alloy defined in claim 1, **characterised in that** the content of chromium and iron does not exceed 10.3 wt.% in total, and the ratio of chromium to iron is in the range of 1-1.3.

3. The alloy defined in any of claims 1 and 2, **characterised in that** it contains ternary (Al-Fe-Cr / Al-Fe-Ti) and quaternary (Al-Fe-Cr-Nb / Al-Fe-Cr-Ti) intermetallics in the amount of 17 to 27 %, ensuring the achievement of the formation of the optimal morphology of the structure.

4. Aluminium alloy powder defined in any of claims 1-3, obtained by gas atomisation using nitrogen or argon, or a mixture of these gases with oxygen, while the powder contains oxygen in the amount of 0.01-0.3 wt.%.

5. A product made of the powder defined in claim 4, obtained on the basis of the alloy defined in any of claims 1-3, made by additive manufacturing, having a strength of no less than 140 MPa at a temperature of 400 °C.
